Europäisches Patentamt

European Patent Office

Office européen des brevets

(11) Publication number: **0 411 205 A2**

# EUROPEAN PATENT APPLICATION

(21) Application number: **89119071.2**

(22) Date of filing: **13.10.89**

(51) Int. Cl.⁵: **C09D 5/08**, C09D 117/00

(30) Priority: **31.07.89 HU 2050389**

(43) Date of publication of application:
**06.02.91 Bulletin 91/06**

(84) Designated Contracting States:
**AT BE CH DE ES FR GB GR IT LI LU NL SE**

(71) Applicant: **INNO-KER Innováci s-Vállalkozási
és Kereskedelemszervezési Kisszövetkezet
Tájék u. 1
H-1112 Budapest(HU)**

(72) Inventor: **Nagy, Imre Kálmár
Als törökvész u. 14
H-1022 Budapest(HU)**

(74) Representative: **Patentanwälte Viering &
Jentschuraura
Steinsdorfstrasse 6
D-8000 München 22(DE)**

(54) Composition, primarily for anticorrosive and insulating coating.

(57) Composition, primarily for anticorrosive and insulating coating, which can be used mainly as anticorrosive coating of car frames, as well as in the building and construction industry as water insulating coating on roof and wall surfaces made of concrete, wood, etc. The composition consists of 40 to 90 volume %, advantageously 50 to 70 volume %, of rubber grist, 0,5 to 30 volume %, advantageously 2 to 20 volume %, of limonene, 0,5 to 30 volume %, advantageously 2 to 10 volume %, of essential or volatile oil extracted from anethum, salvia or carum carvi (foeniculum), further 5 to 30 volume %, advantageously 10 to 20 volume %, lacquer, as well as resin in a quantity necessary for the 100 volume %.

EP 0 411 205 A2

## COMPOSITION, PRIMARILY FOR ANTICORROSIVE AND INSULATING COATING

The invention relates to a composition, primarily for anticorrosive and insulating coating, which can be used mainly as anticorrosive coating of car frames, as well as in the building and construction industry as water insulating coating on roof and wall surfaces made of concrete, wood, etc.

It is known that for anticorrosive insulation the materials can be used, which are of good adhesiveness to metal plate and hollow faces exposed to corrosion, which are elastic and provide a long-lasting, appropriate resistance to mechanical damages. Advantageously it contains an insignificant amount of solvents and is suitable for cold application.

It is known furthermore that in the building industry tarred roofing felts and bitumen (asphalt) are - because of their low prices - widely used. The former is not sufficently adhesive, providing consequently unsatisfactory insulation, the latter must be applied in heated form, and entails thereby difficulties in making roof insulation. There are known (natural and synthetic) resin-based insulators for the same purpose; these are, however, expensive.

Finally, it is a well-known fact that the storage of the used-up rubber tyres gives rise to more and more serious environment protection problems; also their re-use in any form may be of importance.

An object of the present invention is to prepare a composition of the - practically in unlimitted quantity accessible, consequently extremely cheap - starting material, i.e. the used-up rubber tyres, which adheres properly to wooden, concrete or metal surfaces, the applied coating made thereof being elastic, non-rigid, provides for a long-lasting protection against mechanical influences and water, can be applied cold, manually or mechanically, and dries and consolidates, respectively, in a couple of hours following their application.

The object is aimed with a composition consisting of 40 to 90 volume % (percent by volume), advantageously 50 to 70 volume % of rubber grist, 0,5 to 30 volume %, advantageously 2 to 20 volume % of limonene, 0,5 to 30 volume %, advantageously 2 to 10 volume % essential or volatile oil extracted from anethum, salvia or carum carvi (foeniculum), further 5 to 30 volume %, advantageously 10 to 20 volume % of lacquer (varnish), as well as a resin in a quantity necessary for the 100 volume %.

Advantageously, the grain size of the rubber grist lies between 10 and 3000 μm, preferably between 10 and 50 μm.

Advantageously a colouring agent can be added to the composition, either in form of powder or of liquid.

The object of the present invention is further a method for producing the above mentioned composition, in the course of which

a) 40 to 90 volume % of rubber grist, preferably of a grain size of 10 to 50 μm, is mixed with 0,5 to 30 volume % of limonene at a temperature between -10°C and +60°C under a pressure of 0,35 to 2,5 Bar for 10 minutes, as a minimum;

b) 0,5 to 30 volume % of anethum, salvia or carvi (foeniculum) is added thereto and mixed further for 10 to 30 minutes, then

c) adding 5 to 30 volume % of lacquer thereto, being mixed further for 5 to 30 minutes;

d) adding resin thereto in a quantity completing the composition to be 100 volume %, being mixed till the wanted homogenity is reached;

e) storing the resulting composition in a sealed package until application, at a temperature of 30°C as a maximum.

In the course of the method according to the present invention, a colouring agent can be added to the composition, in case of an agent of powder form in step a), whereas in case of an agent of liquid state between steps b) and c).

The components of the composition according to the present invention are as follows:

Rubber:

vulcanized natural or synthetic caoutchouc, named soft or hard rubber depending on the sulfur content, and the allotropes thereof filled with black, with cca. 40 % of coal content.

Limonene:

1,8 (9)-p-methadien
1-methyl-4-isopropenil-1-ciclohexen
carven
liquid of pleasant, limon-like odour
density: 0,840 kg/l
boiling point: 175 to 176°C

Insoluble in water, forms composites with alcohols. Limonene is offen to be found in the nature, in orange skin oil in a volume of 90 %, in carum carvi (foeniculum) oil in a volume up to 40 %, in limon oil.

The limonene is to be found in improved pine oil and in american peppermint oil, the (±) (Dipenthen) in wood-tar oil, in spruce pine-needle oil, in neroly oil, in nutmeg oil and in camphor oil.

Anethum oil:

Essential oil of colour between tintless and yellowish, of odour redolent of foeniculum, extracted from the fruit of anethum by crushing and distillation.
Density: 0.895 to 0.925 kg/l
Soluble in alcohol of 80 %
comprises 40 to 60 % of carvon
dihydrocarvon
limonene
fellanolvene.

Lacquer:

A liquid which - applied on some surface in a thin layer - turns into a solid layer adhering to said surface, after chemical and physical transformations. It is a scum forming natural or artificial resin, which can be made suitable for processing by means of volatile organic solvents, or the mixture of such resins, bitumen, mitrocellulose, natural caoutchouc or a derivative thereof, bitumastic enamel, alkyd resin, chlorocaoutchouc lacquer, copal lacquer, etc.

Their solvents and diluents are liquids, after their subtilization the non-volatile components (non-volatile binding materials, e.g. lenseed oil, plasticizers) from the so called lacquer body, from which the lacquer layer will be produced when dried.

Resins:

They consist of different components (such as hydrocarbons, alcohols, aldehydes, esters, ethers, ketones, phenols, organic acids, amines, etc.), therefore the word "resin" does not refer to a composite, but rather to a physical state. This state means the following features: glass like, amorphous, insoluble in water, soluble in ether or alcohol, fusibility or meltableness, thermoplastic, forms scum from organic dilutants or solvents. Most of the synthetic resins consist of macromolecules (more than 1000 atoms, molecular weight 10.000). These can be produced by polymerization or condensation of simpler compositions, whereas even the intermediate products are called synthetic resins.
Phenol resins, aldehyde resins, aminoplasts, alkyd resins, polyethylenes, polystyrols, polyacril acid esters, polymethacryl acid esters, polyvinyl resins, copolymers, carbamid resins, phenol resins, melamine resins.

(For practical reasons the cellulose and cellulose derivatives are generally distincted from synthetic resins, although the cellulose would be classified in this group, as the chlorine cautchouc.)

Filling materials:

talcum, asbestos, kaolin, quartz porphyry, cellulose, etc.

The object of the present invention will more detailledly be illustrated in the followings.

Example 1

70 volume % of rubber grist of a grain size between 10 and 20 μm, and 20 volume % limonene are mixed on a temperature of -10 to +60° C under a pressure of 0,35 to 2,5 Bar, for 10 minutes, as a minimum, then 10 volume % of essential oil extracted from anethum is mixed thereto at the same temperature and pressure for 10 to 30 minutes, and the composition is applied onto the wanted metal surface by means of a brush or by spraying. It is well adhesive and dries quickly, gives an elastic coating, also provides protection against the damaging effects of jumping up gravels, too, consequently it can be utilized primarily for coating car frames.

Example 2

70 volume% of rubber grist of a grain size of 50 μm and 10 volume % of limonene, 5 volume % of essential oil extracted from anethum and 15 volume % of resin (used in colouring agents) is mixed under the same conditions, as above, by means of a manually operated mixer. The mass produced in this way is applied in the wanted thickness by means of a brush or by spraying on the walls of a wooden house. This layer dries in cca. 6 hours and protects appropiately the surface against the influences of water.

Example 3

50 volume % of rubber grist of a grain size between 10 and 50 μm is mixed with 30 volume % of resin (used in colouring agents), 15 volume % of boat varnish, 25 volume % of limonene and 2,5 volume % of essential oil extracted from anethum, under the same conditions as above, then applied on a roof as an insulating layer. The coating applied in this way is well adhesive, dries quickly, withstands very well the sunshine and cold weather.


## Example 4


60 volume % of rubber grist of a grain size between 10 and 50 μm is mixed with 30 volume % of boat varnish, 5 volume % of limonene and essential oil extracted from anethum, under the same conditions as above. The coating mass produced in this way consolidates quickly, so it can be used e.g. for a water insulating coating of cracks of ceilings. When dried, paint can be applied thereon.

The composition according to the present invention can be used also depending on its components as an anticorrosive coating of car frames, as well as in the building and construction industry as a water insulating coating on roof and wall surfaces (basis) made of concrete, brick or wood. It can be used furthermore as lute or wood cement, and even in horticulture and plant protection against rodents without damaging the plants themselves.

The composition according to the present invention has the advantage that it does not deliquesce under the effect of heat, it is not of contaminating nature, is very elastic and adheres well to different surfaces, e.g. metal. It is resistant to the influences of weather and chemicals, however, it can be removed from the coated surfaces relatively easily, if wanted.

The composition according to the invention can be storaged years long, without special precautionary measures.


## Claims

1. A composition, primarily for autocorrosive and insulating coating, characterised in that it consists of 40 to 90 volume %, advantageously 50 to 70 volume % of rubber grist, 0,5 to 30 volume %, advantageously 2 to 20 volume % of limonene, 0,5 to 30 volume %, advantageously 2 to 10 volume % of essential or volatile oil extracted from anethum, salvia or carum carvi (foeniculum), further 5 to 30 volume %, advantageously 10 to 20 volume % lacquer, as well as resin in a quantity necessary for the 100 volume %.

2. A composition as claimed in Claim 1, wherein said resin is one of the followings: phenol resin, aminoplasts, melamine-formaldehyde resin, polyester-(alkyd-) resin, aldehyde- or ketone resin, polyamide, polyvinyl-derivatives (PVC, PVAC, PV alcohol, PV ester, ketone, carbazole, ester, styrene, polyisobutylene, polyadducts), cellulose ester, collophonium ester, chlorine caoutchouc.

3. A composition as claimed in Claim 1, wherein said lacquer is a resin based lacquer, i.e. one of the specified types, preferahly the same.

4. A composition as claimed in Claim 1, wherein said rubber grist is of a grain size of 10 to 3000 μm, advantageously 10 to 5 μm.

5. A composition as claimed in any of Claims 1 to 4, comprising colouring agents, preferably an inorganic, metallic oxide type product in the form of powder or their mixture with oil; or preferably a synthetic product in the form of a liquid, made of complexes of organic materials.

6. A method for producing a composition as claimed in any of Claims 1 to 4, characterized in that

a) 40 to 90 volume % of rubber grist, preferably of a grain size of 10 to 50 μm, is mixed with 0,5 to 30 volume % of limonene at a temperature between -10° C and +60° C under a pressure of 0,35 to 2,5 Bar, for 10 minutes as a minimum;

b) 0.5 to 30 volume % of anethum, salvia or carvi (foeniculum) is added thereto and mixed further for 10 to 30 minutes, then

c) adding 5 to 30 volume % of lacquer thereto, mixing it further for 5 to 30 minutes;

d) adding resin thereto in a quantity completing the composition to be 100 volume %, mixing it till the wanted homogenity is reached; e) storing the resulting composition in sealed packages until application at a temperature of 30° C as a maximum.

7. A method as claimed in Claim 6, whereby in step a) the rubber grist is mixed with colouring agents in the form of powder, of 0,1 to 8 volume %.

8. A method as claimed in Claim 6, whereby between steps b) and c) colouring agents in the form of a liquid is mixed thereto, of 0,1 to 8 volume %.